Europäisches Patentamt

European Patent Office

Office européen des brevets

(19)

(11) Numéro de publication : **0 197 853**
**B1**

(12)

# FASCICULE DE BREVET EUROPÉEN

(45) Date de publication du fascicule du brevet :
04.05.88

(21) Numéro de dépôt : 86400683.8

(22) Date de dépôt : 28.03.86

(51) Int. Cl.⁴ : **B 23 K   9/28**, B 23 K 37/02,
**B 23 Q  1/16**

(54) Mécanisme de positionnement pour torches de soudage.

(30) Priorité : 29.03.85 FR 8504768

(43) Date de publication de la demande :
15.10.86 Bulletin 86/42

(45) Mention de la délivrance du brevet :
04.05.88 Bulletin 88/18

(84) Etats contractants désignés :
DE GB IT SE

(56) Documents cités :
CH-A-   284 531
FR-A- 2 516 831
GB-A- 1 184 605
US-A- 4 268 740

(73) Titulaire : REGIE NATIONALE DES USINES RENAULT
Boîte postale 103 8-10 avenue Emile Zola
F-92109 Boulogne-Billancourt (FR)

(72) Inventeur : Chavignaud, Christian
5, Allée Fournier
F-92150 Suresnes (FR)
Inventeur : Guichard, Michel
49, rue du Lieutenant Colonel Le Sabazec
F-78220 Viroflay (FR)

(74) Mandataire : Réal, Jacques et al
Régie Nationale des Usines Renault SCE 0804
F-92109 Boulogne Billancourt Cedex (FR)

EP 0 197 853 B1

Jouve, 18, rue St-Denis, 75001 Paris, France

## Description

La présente invention se rapporte à un dispositif qui assure le positionnement et le maintien de torches de soudage.

Ce dispositif est destiné aux torches de soudage montées notamment sur des machines automatiques conventionnelles ; il convient particulièrement au repositionnement rapide de torches équipant des robots de soudage et aux procédés de soudage MIG et MAG.

Dans les dispositifs connus de fixation à glissières, tourillons, vis et lumières, des difficultés sont couramment rencontrées pour rechercher la direction convenable de réglage ; de surcroît, il s'avère souvent nécessaire de se reprendre plusieurs fois pour obtenir la ou les positons où l'alignement de l'arrière de la torche (entrée de fil) et le repositionnement correct de l'axe du fil-électrode vis-à-vis de l'axe du joint de soudure sont assurés.

Les dispositifs à rotule conventionnels permettent de résoudre certains cas de manière simple, sans conserver toutefois l'alignement de l'entrée de fil avec l'entraîneur de fil.

L'invention a pour but de remédier aux inconvénients des solutions connues avec un montage du type à rotule particulièrement simple et efficace.

A cet effet, et suivant une particularité essentielle de l'invention, le mécanisme de positionnement du type monté sur un support de torche et traversé axialement par la torche, comprend :

- une rondelle filetée, fixée au support et pourvue d'une surface d'appui sphérique ;
- un écrou à créneaux, vissé sur cette rondelle à une extrémité et pourvu à l'autre extrémité, d'un siège interne axial, creux et muni d'une portée sphérique ;
- une bague intermédiaire, pourvue d'un alésage conique et en appui sur la portée de ce siège par une surface sphérique ;
- et une bague fendue isolante coopérant intérieurement avec le corps de torche et extérieurement avec cet alésage conique ainsi qu'avec la surface d'appui de cette rondelle filetée par une portée sphérique ;
les deux surfaces d'appui et les deux portées étant décrites par des rayons dont le centre commun coïncide avec le point d'entrée réglable de la torche.

Ce mécanisme ainsi constitué se révèle mécaniquement simple, compact et peu sensible aux nuisances propres à un milieu de soudage à l'arc. Il permet de positionner transversalement l'extrémité de la torche à l'intérieur d'une surface circulaire dont le diamètre permet la prise en compte des défauts géométriques des corps de torche, et de régler la position longitudinale ainsi que la rotation du corps de torche par un serrage unique.

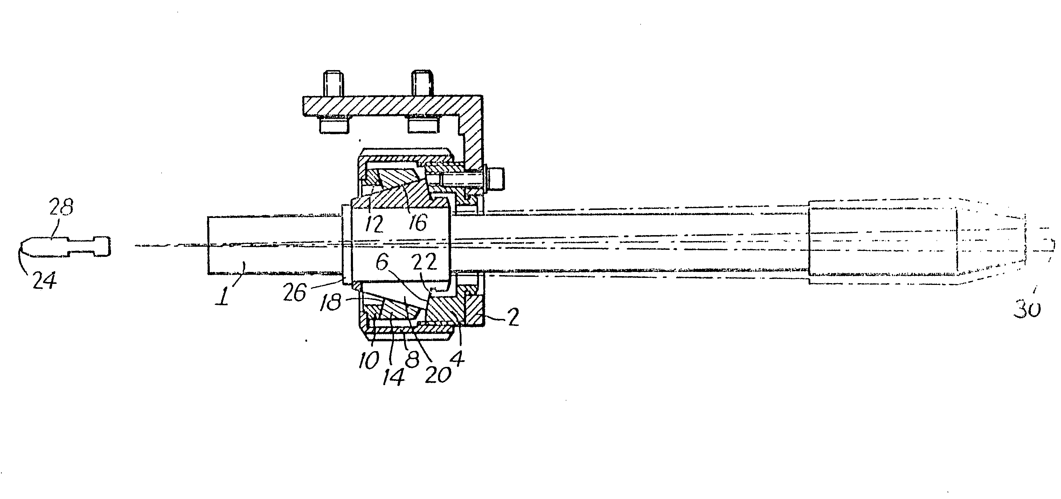

D'autres particularités et avantages apparaîtront plus clairement à la lecture de la description qui suit d'un mode de réalisation préférentiel donné à titre d'exemple non limitatif et en référence à la figure unique du dessin annexé qui représente une vue en coupe axiale de ce mécanisme.

Conformément à cette figure, un tel mécanisme destiné au positionnement d'une torche de soudage 1 est fixé par vissage sur une équerre de support 2 par l'intermédiaire d'une rondelle filetée 4 pourvue d'une surface d'appui sphérique 6. Un écrou à créneaux 8 est vissé sur cette rondelle à une extrémité et comporte à son autre extrémité, un siège interne 10 axial, creux et muni d'une portée sphérique 12. Une bague intermédiaire 14 à alésage conique 16 repose sur la portée 12 de ce siège par une surface sphérique 18. Une bague fendue isolante 20 coopère par son alésage intérieur avec le corps de torche 1. Elle coopère extérieurement avec l'alésage conique 16 de la bague intermédiaire 14 ainsi qu'avec la surface d'appui 6 de la rondelle 4 par une portée sphérique 22. Les surfaces d'appui sphériques 6, 18 et les portées sphériques 22, 12 correspondantes sont réalisées de manière que les rayons qui les décrivent soient issus d'un centre commun. Ce centre commun est superposé au point d'entrée réglable 24 de la torche pour un fonctionnement correct de celle-ci.

Le mécanisme précédemment décrit fonctionne de la manière suivante.

Le serrage de l'écrou à créneaux 8 entraîne une poussée axiale de la bague intermédiaire 14 par le siège 10, vers la rondelle 4, et une poussée radiale exercée par cette bague sur la bague fendue 20. Cette bague fendue immobilise simultanément le corps de torche 1 en position, par l'intermédiaire d'une bague d'adaptation facultative 26.

Le processus de réglage de la torche est le suivant :

l'écrou 8 étant en position desserrée, la torche est introduite par l'avant ou par l'arrière. du mécanisme, selon la conception de celle-ci. Elle est alors orientée en rotation.

A ce stade, l'écrou 8 doit être préserré manuellement ; le réglage fin en distance et en position d'impact de la pointe-outil 30 est effectué simultanément.

L'écrou est ensuite bloqué par une clef à ergot.

A la suite d'une erreur de parcours ou d'un choc entraînant un déréglage de l'impact de la pointe-outil, il s'avère ainsi très aisé de remédier au défaut de position, toutes les directions de recalage étant possibles.

L'invention présente donc un mécanisme de positionnement articulé à centre fixe qui permet une inflexion limitée et un réglage longitudinal de la torche tout en conservant une possibilité de rotation.

De nombreux avantages en découlent :

- un serrage simple et unique, indépendant des ambiances d'un arc électrique MAG ;
- un maintien de la concentricité au point d'entrée de la torche pour des mécanismes d'entraînement à galets disposés en direct ;

- une plage de réglage continue de la pointe-outil à l'intérieur d'une surface circulaire, dont le diamètre permet l'acceptation de défauts géométriques inhérents aux corps de torches droites et surtout de torches cambrées, associée à un réglage axial de cette pointe-outil ;

- une fonction d'isolation à la masse intégrée au serrage.

**Revendications**

1. Mécanisme de positionnement pour torches de soudage du type monté sur un support (2) de torche et traversé axialement par la torche (1), caractérisé en ce qu'il comprend :

- une rondelle filetée (4) fixée au support (2) et pourvue d'une surface d'appui sphérique (6) ;

- un écrou à créneaux (8) vissé sur la rondelle (4) à une extrémité et pourvu à l'autre extrémité d'un siège interne (10) axial, creux et muni d'une portée sphérique (12) ;

- une bague intermédiaire (14) pourvue d'un alésage conique (16) et en appui sur la portée (12) du siège (10) par une surface sphérique (18) ;

- et une bague fendue isolante (20) coopérant intérieurement avec le corps de torche (1) et extérieurement avec l'alésage conique (16) ainsi qu'avec la surface d'appui (6) par une portée sphérique (22) ;

les surfaces d'appui (6, 18) et les portées (22, 12) étant décrites par des rayons dont le centre commun coïncide avec le point d'entrée réglable (24) de la torche.

2. Mécanisme de positionnement suivant la revendication 1, caractérisé en ce qu'une bague d'adaptation (26) sépare la bague fendue isolante (20) du corps de torche (1).

**Claims**

1. A positioning mechanism for welding torches of the type mounted on a torch carrier (2), through which the torch (1) axially passes, characterised in that it comprises :

- a screwthreaded ring (4) which is fixed to the carrier (2) and which is provided with a spherical support surface (6) ;

- a castellated nut (8) which is screwed on to the ring (4) at one end and provided at the other end with an axial hollow internal seat (10) provided with a spherical bearing surface (12) ;

- an intermediate ring member (14) provided with a conical bore (16) and bearing against the bearing surface (12) of the seat (10) by means of a spherical surface (18) ; and

- a split insulating ring member (20) co-operating internally with the torch body (1) and externally with the conical bore (16) and with the support surface (6) by means of a spherical bearing surface (22) ;

the support surfaces (6, 18) and the bearing surfaces (22, 12) being described by radii whose common centre coincides with the adjustable point of entry (24) of the torch.

2. A positioning mechanism according to claim 1 characterised in that an adaptor ring member (26) separates the split insulating ring member (20) from the torch body (1).

**Patentansprüche**

1. Einstellungsgetriebe für Schweißbrenner, das auf einer Halterung (2) für den Brenner angeordnet ist und axial von der Flamme (1) durchsetzt wird, gekennzeichnet durch die folgenden Teile :

- einen an der Halterung (2) befestigten Gewindering (4) mit einer sphärischen Stützfläche (6),

- eine Zackenmutter (8), die auf den Ring (4) an einem Ende aufgeschraubt ist, wobei sie an ihrem anderen Ende einen axialen hohlen Innensitz (10) aufweist mit einem sphärischen Anschlag (12),

- einen Zwischenring (14) mit einer konischen Bohrung (16), der sich auf dem Anschlag (12) des Sitzes (10) über eine sphärische Oberfläche (18) abstützt,

- und einen isolierenden geschlitzten Ring (20), der innen mit dem Brennerkörper (1) und außen mit der konischen Bohrung (16) zusammenwirkt sowie mit der Stützfläche (6) über eine sphärische Anschlagfläche (22), wobei die Stützflächen (6, 18) und die Anschlagflächen (22, 12) durch die Halbmesser bestimmt werden, deren gemeinsamer Mittelpunkt mit dem einstellbaren Eintrittspunkt (24) des Brenners zusammenfällt.

2. Einstellungsgetriebe nach Anspruch 1, dadurch gekennzeichnet, daß ein Anpassungsring (26) den geschlitzten isolierenden Ring (20) vom Brennerkörper (1) trennt.